# EUROPEAN PATENT APPLICATION

(11) **EP 4 717 730 A1**
(43) Date of publication of application: **01.04.2026**
(21) Application number: 25194206.6
(22) Date of filing: 05.08.2025
(51) Int. Cl.: C08J 11/24, C08J 11/16

(54) **CHEMICAL RECYCLYING OF WASTE FLEXIBLE POLYURETHANE FOAM TO RIGID POLYUERTHANE FOAM MATERIALS**

(30) Priority: 06.08.2024 US 202463679931 P; 28.08.2024 US 202418817571
(71) Applicant: Foam Ecosolution Innovation, Inc., Vancouver BC V6B 0B5 (CA)
(72) Inventor: Ahmadi, Dr. Alaeddin, Vancouver, V6B 0B5 (CA); Tabatabei, Seyed Hamid, Vancouver, V6B 0B5 (CA)
(74) Representative: Franke, Dirk

(57) **Abstract**

The process uses specific glycolysis reactions using a unique solvent system combined with metal catalysts including zinc undecylenate to chemically convert waste flexible polyurethane foam to recycled polyol. In this process, waste polyurethane foams react with the solvent system at elevated temperatures together in the presence of the metal catalyst(s) to break the urethane bonds and release polyols.

## Description

### PRIOR APPLICATION INFORMATION

The instant application claims the benefit of US Provisional Patent Application 63/679,931, filed August 6, 2024 and entitled "CHEMICAL RECYCLYING OF WASTE FLEXIBLE POLYURETHANE FOAM TO RIGID POLYUERTHANE FOAM MATERIALS", the entire contents of which are hereby incorporated herein by reference for all purposes.

### BACKGROUND OF THE INVENTION

The use of polyurethane (PU) rigid foam is continuing to grow at a rapid rate throughout the world. This growth can be attributed to their light weight, excellent strength to weight ratio, great thermal energy performance and other comfort features.

Currently, the vast majority of PU foam materials, including flexible PU foam mattress, are largely produced from petrochemical feedstocks. As such, they are produced from non-renewable sources, significant greenhouse gas (GHGs) emissions are emitted during their manufacture and they are difficult to recycle at end of life. Currently, all the waste or scrap PU foam from mattress manufactures go into landfill disposal and result in many negative environmental issues. Inevitably, a significant amount of waste mattress PU-containing materials are also generated as they reach the end of their useful life from end-users. Just in the Canadian province of British Columbia, the volume of scrap and end-of-life cycle PU that currently ends up in landfills is estimated at 18,000 tons per year. A considerable amount of manufacture's scrap is also made whenever flexible slab and molded PU foams are produced. The scrap has some value when it is reused for re-bonding applications, such as carpet padding and NVH [noise/vibration/harshness] cushioning. However, the supply of scrap usually outstrips demand. Moreover, much of the scrap produced is unsuitable and must be directed to a landfill. Therefore, there is an immediate need to redirect waste polyurethane foam from landfill and find an appropriate solution to convert them to value-added products. The chemical recycling of waste PU foam mattress to recovered polyol for PU foam reproduction is considered a suitable answer for this current problem.

### SUMMARY OF THE INVENTION

According to an aspect of the invention, there is provided a method for recovering polyol from polyurethane foam comprising:
heating a glycolysis solvent thereof to a temperature of about 190°C to about 210°C;
once the glycolysis solvent is heated, adding a quantity of polyurethane foam to the heated solvent such that the polyurethane foam dissolves into polyol,
once the quantity of the polyurethane foam has dissolved into polyol, allowing the polyol to cool and then filtering the polyol,
wherein a metallic catalyst is added to the glycolysis solvent mixture after heating has started but before the solvent reaches 190°C.

According to another aspect of the invention, there is provided a method for recovering polyol from a quantity of polyurethane foam comprising:
heating a glycolysis solvent comprising glycerol, ethylene glycol, diethylene glycol or a mixture thereof to a temperature of about 90°C and then adding a metal catalyst comprising zinc undecylenate to the glycolysis solvent;
heating the glycolysis solvent and metal catalyst to a temperature of about 190°C to about 210°C and then adding a quantity of polyurethane foam in stages to the heated glycolysis solvent such that the polyurethane foam dissolves into polyol,
wherein once the quantity of polyurethane foam has been added to the glycolysis solvent and the metal catalyst, a product of the reaction comprises:
   28-70% (w/w) glycolysis solvent;
   28-70% (w/w) polyol; and
   2-5% (w/w) metallic catalyst
   wherein, prior to addition to the glycolysis solvent, the polyurethane foam is in pieces having a diameter of about 5 mm to about 25 mm, and
   once the quantity of the polyurethane foam has dissolved into polyol, allowing the polyol to cool and then filtering the polyol.

### BRIEF DESCRIPTION OF THE DRAWINGS

Figure 1: Application of PU rigid foam as insulation materials board. The insulation PU foam board can be made from waste mattress foam.
Figure 2: Rigid PU foam production using recovered polyol through molding process.
Figure 3: laboratory chemical glycolysis process to polygreen polyol from waste flexible polyurethane foam.
Figure 4: testing rigid PU foam production from blend of polygreen polyol and commercial polyol via cup test without performing and formulation or adding chemicals.
Figure 5: process of making large piece of rigid PU foam block using semi commercial foam dispenser machine (foam block size: 30cm wide x 30cm length x 5cm height).

### DESCRIPTION OF THE PREFERRED EMBODIMENTS

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are now described. All publications mentioned hereunder are incorporated herein by reference.

This unsustainable approach in PU foam production methods and their final recycling process has necessitated efforts around the globe aimed to replace the petroleum-based PU foam with chemically recycled polyol materials from waste PU foam.

In this research work we have created an effective chemical process (glycolysis reaction process) which can convert waste PU foam mattress and other flexible PU foam in a more feasible and economical manner. Firstly, it can address the increasingly unacceptable practice of landfill disposal of factory trim slab stock polyurethane rejects and end-of life mattress foam materials. Secondly, our recycling solution produces a valuable recovered polyol which can be used in the production of rigid PU foam materials. The recycled rigid PU foam materials have a wide range of application including different insulation functions. Furthermore, using recovered polyol in rigid PU foam production can help in offsetting the high cost of petroleum-based virgin polyols.

### Overall Project Methodology

We have developed an innovative proprietary technology that converts any waste mattress polyurethane (PU) foam or soft PU foam from furniture and automobile seats into high-quality recovered polyol (referred to as "polygreen polyol") which can be used in rigid polyurethane foam production with a wide range of insulation applications.

The technology uses an innovative chemical process to chemically recycle polyurethane scrap foam into high quality recovered polyol products. Good chemical conversion of waste flexible PU foam has been demonstrated using a unique and affordable solvent/catalyst combination. As discussed herein, the recovered polyol produced has very similar physiochemical properties to other available commercial polyol compounds. As a result, the recycled polyols can be used on their own or readily blended with any available commercial polyol made from petroleum products. Specifically, the obtained recovered polyol from waste PU foam flexible materials can be readily combined with any available commercial polyol up to for example 40% or 50% substitution for production of rigid PU foam materials. Consequently, this technology can divert metric tons of waste mattress PU foam from landfill and convert them to value-added products. Furthermore, the lower price of recovered polyol can be very beneficial for PU foam manufacturer economically. Our technology results in less landfill practice, reduces dependency on the petroleum industry for the production of virgin polyol, and greatly reduces greenhouse gas (GHG) emission.

Specifically, as discussed herein, waste flexible PU foam including conventional mattress foam is used as a source to produce recycled polyol, which replaces virgin polyol in the rigid PU manufacturing process. However, the process itself can be categorized in three main categories defined as A) sorting and physical recycling, B) chemical recycling of waste mattress and any other flexible PU foam to polyol and C) producing rigid polyurethane foam from recycled polyol.

Although there are many physical recyclers for waste PU foam across North America, our research suggests that, with the exception of the re-bonded flexible foam industry, there are currently no active targeted chemical recycling programs that aim to recover waste flexible polyurethane foam for high-value reprocessing as intended by our chemical technology. Therefore, our entire technical process is categorized in these three subdivisions as follows:
1. Physical recycling, including sorting, cleaning and shredding waste soft PU foam;
2. Chemical recycling of flexible PU foam (waste mattress, furniture, car seats and etc.) to recycled polyol;
3. Upcycling recycled polyol to rigid PU foam materials with wide range of applications.

Our process uses specific glycolysis reactions (using a unique recycled solvent system combined with a specific metal catalyst) to chemically convert waste flexible polyurethane foam to recycled polyol products and, from there, to new, recycled rigid PU foam products. In this process, waste polyurethane foams react with a specific solvent system (recycled glycerol and/or recycled diethylene glycol) at elevated temperatures together with specific metal catalyst (zinc undecylenate), generally referred to as "anti-microorganism metal-based" to break the urethane bonds and release polyols. Furthermore, in some embodiments, depending on the amount of waste flexible PU foam (30% to 50%), the amount solvent-catalyst system can be adjusted accordingly to optimize reaction rate.

Our unique glycolysis formulation resulted in faster reaction rate (15% faster than current processes) due to using specific catalyst system.

Our specific anti-microorganism catalyst (zinc undecylenate) can also be sprayed on waste mattress foam prior to chemical reaction in order to kill unwanted microorganisms.

In some embodiments of the invention, the obtained recovered polyol product can be simply blended with any commercially available virgin polyol materials up to for example 40%-50%. At this blending ratio, the end user or industrial polyurethane manufacturers would not need to make significant modifications to their polyol formulation. Our earlier studies have validated the similarities of the analytical properties between recycled polyol and virgin polyols in terms of product density, resilience and reaction profile (mixing, cream and gel times).

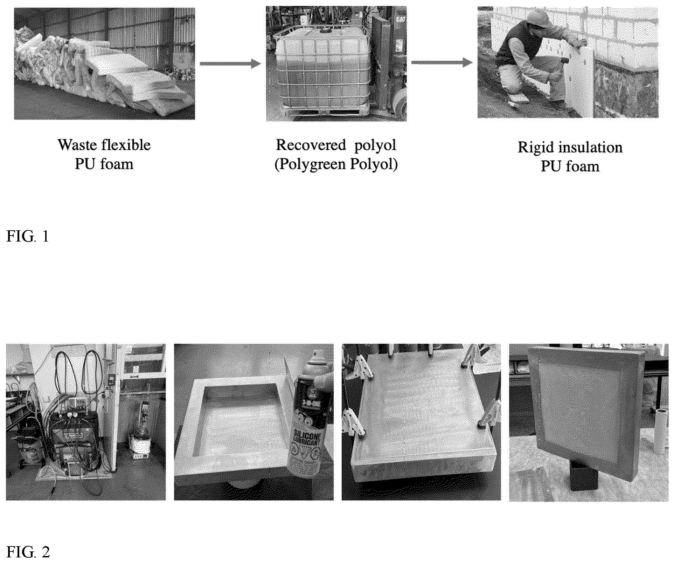

Our novel chemical process which utilizes effective and economic solvent system and catalyst can break down waste flexible mattress foam to recycled polyol materials as value-added product for reproduction of rigid polyurethane foam as insulation materials. In this reproduction process, the recycled polyol with its unique chemical characteristic can be readily mixed with any available commercial polyol and it can be easily converted to rigid PU foam insulation products (FIG. 1). The rigid PU foam insulation products can have a variety of insulation properties and a correspondingly wide range of applications. For example, customers in the construction industry can choose from various types of insulation products to full fill their needs. In this innovative process, the recycled polyol can be also upcycled to value added products as rigid PU foam products such as insulation materials. Thus, our innovative process not only can accomplish recycling process; we have established upcycling procedure to generate real application of this recovered polyol material. FEI chemical process steps towards a healthier and more sustainable future for our planet by reducing amount of waste from landfill. According to an aspect of the invention, there is provided a method for recovering polyol from polyurethane foam comprising:
heating a glycolysis solvent thereof to a temperature of about 190°C to about 210°C;
once the glycolysis solvent is heated, adding a quantity of polyurethane foam to the heated solvent such that the polyurethane foam dissolves into polyol,
once the quantity of the polyurethane foam has dissolved into polyol, allowing the polyol to cool and then filtering the polyol,
wherein a metallic catalyst is added to the glycolysis solvent mixture after heating has started but before the solvent reaches 190°C.

In some embodiments, the product of the finished reaction comprises:
28-70% (w/w) glycolysis solvent; 28-70% (w/w) polyol; and 2-5% (w/w) metal catalyst, or
48-70% (w/w) glycolysis solvent; 28-50% (w/w) polyol; and 2-5% (w/w) metal catalyst.

The metal catalyst may be one or more catalysts selected from the group consisting of stannous octoate, potassium octoate, potassium acetate, zinc acetate, barium acetate, tin dilaurate, tin oxide and zinc undecylenate.

The metal catalyst may comprise zinc undecylenate.

The metal catalyst may comprise 1-5% (w/w) zinc undecylenate and may further comprises 0-4% (w/w) of a second metal catalyst selected from the group consisting of: stannous octoate, potassium octoate, potassium acetate, zinc acetate, barium acetate, tin dilaurate, and tin oxide.

That is, the metal catalyst may be 2-5% zinc undecylenate or may be 1-4% zinc undecylenate and 1-4% second metal catalyst selected from the group consisting of: stannous octoate, potassium octoate, potassium acetate, zinc acetate, barium acetate, tin dilaurate, and tin oxide.

As discussed herein, the dissolving of the polyurethane foam into the polyol may be carried out under conditions of limited oxygen, for example, under nitrogen gas or under a nitrogen atmosphere.

The metal catalyst may be added to the glycolysis solvent once the glycolysis solvent has been heated to about 90°C.

A condenser may be applied to the glycolysis solvent once the glycolysis solvent is heated to about 120°C.

The polyol, that is, the product of the reaction, may be cooled to about 60°C before being filtered and may be filtered through a 400 mesh filter.

Prior to addition to the heated glycolysis solvent, the polyurethane form may be or may have been cut in pieces having a diameter for example an average diameter of between about 5 mm and about 25 mm.

The glycolysis solvent may be selected from the group consisting of glycerol, diethylene glycol, ethylene glycol and mixtures thereof.

According to another aspect of the invention, there is provided a method for recovering polyol from a quantity of polyurethane foam comprising:
heating a glycolysis solvent comprising glycerol, ethylene glycol, diethylene glycol or a mixture thereof to a temperature of about 90°C and then adding a metal catalyst comprising zinc undecylenate to the glycolysis solvent;
heating the glycolysis solvent and metal catalyst to a temperature of about 190°C to about 210°C and then adding a quantity of polyurethane foam in stages to the heated glycolysis solvent such that the polyurethane foam dissolves into polyol,
wherein once the quantity of polyurethane foam has been added to the glycolysis solvent and the metal catalyst, a product of the reaction comprises:
   28-70% (w/w) glycolysis solvent;
   28-70% (w/w) polyol; and
   2-5% (w/w) metallic catalyst
   wherein, prior to addition to the glycolysis solvent, the polyurethane foam is in pieces having a diameter of about 5 mm to about 25 mm, and
   once the quantity of the polyurethane foam has dissolved into polyol, allowing the polyol to cool and then filtering the polyol.

In some embodiments of the invention, the product of the reaction comprises:
48-70% (w/w) glycolysis solvent;
28-50% (w/w) polyol; and
2-5% (w/w) metal catalyst.

In some embodiments of the invention, the metal catalyst comprises 1-5% (w/w) zinc undecylenate and 0-4% (w/w) one or more catalysts selected from the group consisting of stannous octoate, potassium octoate, potassium acetate, zinc acetate, barium acetate, tin dilaurate and tin oxide.

In some embodiments of the invention, dissolving of the polyurethane foam into the polyol is carried out under conditions of limited oxygen, for example, under nitrogen gas or a nitrogen atmosphere.

In some embodiments of the invention, a condenser is applied to the glycolysis solvent once the glycolysis solvent is heated to about 120°C.

In some embodiments of the invention, the polyol, that is, the product of the reaction, is cooled to about 60°C before being filtered, for example, through a 400 mesh filter.

The invention will now be further explained and/or elucidated by way of examples, provided below. However, the invention is not necessarily limited to or by the examples.

### Required materials and method for glycolysis

Industrial samples of waste flexible PU foam mattress (conventional PU foam mattress) based on polyether polyol were scrapped with an arbitrary diameter ranging from about 5 to about 25 mm or 5 to 25 mm. Specifically, as used herein, "about" and/or "approximately" refers to the base number plus or minus 10%. As such, "about 100" means "90-110". Without wishing to be bound to a particular theory or hypothesis, the inventors believe that the size of shredded waste foam is important as powder-like material will react chemically very quickly but that is accompanied with a significant risk of combustion. Larger pieces, for example, pieces larger than about 25 mm, react slower due to comparatively lower available surface area. The scrap foam was reacted in single mass ratios, with recycled glycerol, for example, glycerol formed during biodiesel production as the glycolysis agent (crude glycerol). The ratios of glycolysis agent to PU foam in this example was in 1:1 ratio by weight. the recycled glycerol was obtained from lower mainland biodiesel in Vancouver British Columbia. Zinc undecylenate was used as catalyst 2wt% by and it was purchased from Sigma-Aldrich. Methylene diphenyl diisocyanate and commercially available polyol (Huntsman PIP 250CG slow) for rigid PU foam production were also obtained from Huntsman company. Although in PU foam reproduction, polygreen polyol is miscible with any commercial available polyol suitable for rigid PU foam manufacturing.

### Glycolysis and depolymerization chemical reaction of waste flexible PU foam:

The glycolysis reactions were carried out in a jacketed 5 L round bottom reactor equipped with stirrer and refluxing condenser under nitrogen atmosphere to avoid oxidation. Specifically, in some embodiments, the reaction is carried out under nitrogen so as to reduce oxidation but also to reduce the risk of combustion. The glycolysis agent was placed in the reactor and when the temperature raised the desired level (200°C), the corresponding quantity of scrap foam was added over the course of an hour by means of a continuous feeder, according to its dissolution. The final time for the reaction was taken when all the foam was fed. Temperature was maintained at about 200°C during the feeding process and during the reaction.

The recycled polyol solution produced during the batch test was subjected to a detailed characterization as follows:
- Shear viscosity
- Hydroxyl number
- Molecular weight
- Functionality
- Specific gravity
- Water content

### Investigating rigid PU foam production from recycled polyol:

All rigid PU foam parts were produced by mixing the recovered polyol generated from flexible waste PU foam with commercially available polyol (Huntsman PIP 250CG slow). The rigid PU foam production was tested using two different methods, standard cup test process and closed mold injection process using 3 pieces mold as shown below (FIG. 2B).

In cup test and the closed mold injection process these 4 components are used:
- Commercial Polyol
- Water
- Recovered Polyol
- Polymeric Methylene Diphenyl Diisocyanate (PMDI)

The following steps were followed to produce foam from recycled polyol in clear cups:
1. Place coffee cup on a weighing scale and record the scale reading
2. Add virgin polyol to the cup using a syringe
3. Add 5 drops of water using a micro pipette and mix until the solution is homogeneous
4. Add recycled polyol to the cup using a syringe and mix until the solution is homogeneous
5. Add PMDI to the cup using a syringe and mix the solution until heat starts to release
6. Record the cream time
7. Record the foam rising time
8. Record the tact-free time

All produced rigid PU foam from standard mold underwent the following characterization process:
- Dimensional stability test
- Compression test
- Elongation test
- Tear measurement
- Thermal resistant characterization
- Density measurement
- UV stability test
- Flame spread classification

The recovered polyol was combined with any available standard commercial polyol to produce PU rigid foam products, for example, but by no means limited to rigid PU foam insulation products such as insulated concrete form rigid foam; hydronic foam board materials such as flooring; and standard rigid insulation foam board for walls and ceilings.

### Results and Discussion

### Glycolysis reaction using novel solvent system and catalyst

The composition described is 50% flexible waste PU foam mattress, and 50% solvent system which contained recycled glycerol and zinc undecylenate. The 50% solvent portion is comprised of 98% recycled glycerol and 2% zinc undecylenate. However other solvent such as recycled diethylene glycol, recycled ethylene glycol can be used in this glycolysis reaction system. Beside zinc undecylenate as primary catalyst, other metallic catalyst (either alone or combined zinc undecylenate) such as stannous octoate, potassium octoate, potassium acetate, zinc acetate, barium acetate, tin dilaurate and tin oxide can be also used for glycolysis reaction. It was concluded that the weight ratio of the waste PU foam to solvent system is 50%:50% respectively; however that ratio can be varied and ranged to 30%: 70%. The following table shows how much of each material was added to the reactor.

### Reactor Setup and Heating Solvent System and Catalyst

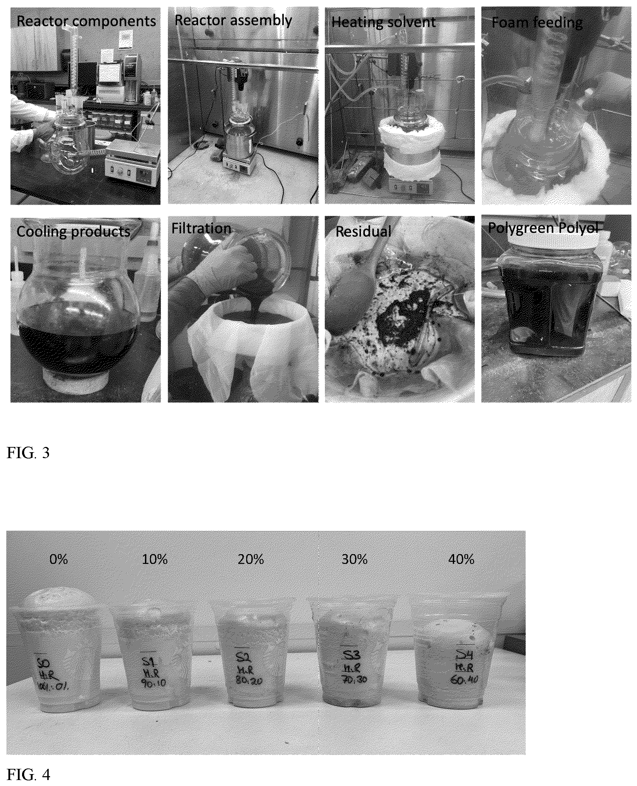

Setting up was done by placing the reactor in the pot by adding a layer of sand between the glass reactor and the metal pot, and adding an insulation wrap around the pot secured with aluminum tape (FIG. 3). The mixer rod was then inserted into the reactor and threaded through the center small opening of the lid. A thermocouple was placed in the far side small opening to keep track of the solution temperature and held in place by a cork stopper, while a condenser was placed on the near side small opening. The top was then sealed with a clamp. The solvent mixture was then added to the reactor first by mixing the recycled glycerol and/or combined with recycled diethylene glycol. Those two solvents were used alone or mixed and heated up to about 90°C at which point the solid metal catalyst was added to the reactor. As will be appreciated by those of skill in the art, in some embodiments, heating of the solvent promotes dissolution of the catalyst. Once the solution reached 120°C, the condenser was turned on to minimize the loss of solvent through vaporization as much as possible. In Specifically, in some embodiments of the invention, a condenser is used to reduce loss of solvent, thereby improving yield of the process. The solvent solution was mixed and heated to 200°C (ranged from 190 °C to 210 °C); it remained clear with a slight yellow tinge. Once the solvent solution reached 200°C, the foam pieces started to be added to the solvent/catalyst system. optimum reaction rate was observed in temperature range of 190 to 210C. While not wishing to be bound to a particular theory or hypothesis, the inventors believe that at temperatures below 190C, the reaction is very slow whereas above 210C, other reactions can occur which can lead to, for example, oxidation and loss of solvent.

### Foam Feeding and Depolymerization

Once the solvent solution reached 200°C, the foam pieces started to be added to the solvent. The pieces dissolved very quickly into the solvent and the solution turned a deep brown colour quickly after first 10min feeding process. The solution remained at a decently low viscosity, as shown in Table 2. the entire time during the entire foam feeding with the only significant change being the color turning more opaque brown. Shown in Figure 3 is the picture of the solution once all of the foam is added to the solvent. After the last pieces of foam was added, the mixer was left to run for half an hour to ensure that all of the foam was well mixed into the solvent and that the reaction was as uniformly homogenous solution as possible. Foam feeding and the entire depolymerization reaction in presence of zinc undecylenate catalyst took a total of two and a half hours which showed to be 30 min faster than other reaction in presence of metallic catalyst such as stannous octoate, zinc acetate and the like. Each time a piece of foam was added to the solvent, the reactor would fill with cloudy vapor but would quickly dissipate with the help of the condenser.

After half an hour the mixer and heater were both turned off and the solution was left to cool down to about 60°C. The filtration process takes place at about 60°C. Specifically, in these embodiments, filtration is carried out at 60-70C as higher temperatures may damage the filter cloth whereas lower temperatures the solution is slower to pass through the filter cloth because of the thickness of the solution.

### Filtration of the Recovered Polyol

Once the recovered polyol reached 60°C the reactor was taken out of the sand pot and taken over to the filtration set up as shown in FIG. 3. The filtration set up consisted of a filter funnel with a mesh cloth (made of nylon, size of 400 mesh) to catch any residue left all on top of a flask. Filtration occur using natural gravity process of the solution without using any vacuum pump connection. The recovered polyol looked like it was a consistent one phase with low viscosity and the entire filtration process was very quick since the recovered polyol flowed very easily. There was some residue leftover (between 0.25% to 2% of total weight of initial waste PU foam) in the mesh cloth which is assumed to be the unreacted waste mattress PU foam. As will be known to those of skill in the art, typical prior art reactions leave 2 to 10wt% unreacted material whereas the residual material left in the method described herein is reproducibly around 2wt%. This residue was left to dry overnight and washed three times with water and characterized to be unreacted PU foam. The filtered recovered polyol was then transferred into plastic containers for storage and labelled appropriately. The collected recovered polyol showed to be stable homogenous single phase liquid over long period of time (more than 12 months). The recovered polyol showed very good compatibility with any commercial polyol and single-phase homogenous solution of mixed polyol (recovered polyol and commercial polyol) of any mixing ratio was obtained once mixed physically.

### Chemical and physical properties of recovered polyol

In this study glycolysis of flexible PU foams has been investigated in the presence of different catalysts in order to obtain high quality recovered polyols via glycolysis in a short reaction time. The traditional catalyst products made from Diethanol amine (DEA), potassium or sodium hydroxide, zinc acetate, stannous octoate and other organometal catalyst have been employed as well as one new novel catalyst for the process: zinc undecylenate. All the catalysts assayed showed appropriate activity compared with the non-catalysed process, allowing the complete recovery of polyols from the polyurethane matrix. However, using zinc undecylenate has been shown to be advantageous for the recovery process. Specifically, the zinc undecylenate leads to the complete degradation of the polymeric chain at a shorter reaction time compared to other published catalysts and the catalysts used for comparative purposes in this research study. Zinc undecylenate also resulted in the recovery of the polyol in higher concentration or higher yield, as discussed herein. Specifically, the obtained solid residual after glycolysis reaction was shown to be less than 1%, which is much lower than other pervious published catalyst. Finally, in addition to other advantages such as faster reaction rate and antifungal/anti-microorganism properties, the amount of zinc undecylenate used was just 2% of total weight of reaction. The zinc undecylenate has shown high selectivity for the glycolysis process, avoiding hydrolysis. Specifically, in presence of this novel catalyst the lowest primary amine content has been obtained, demonstrating the improvement in the performance of glycolysis reaction. As will be apparent to those of skill in the art, this demonstrates the efficiency of the process, as undesirable products such as TDA and other primary amines are reduced in the final recycled polyol. This is critical as these undesirable components can greatly affect foam formation from recycled polyol. However, by using zinc undecylenate as catalyst and keeping temperature between 190C to 200C, the inventors have produced recycled polyol with lower levels of primary amine and better PU foam formation compared to prior art methods. As a result, the novel catalysts developed have proved to be of a low cost and improved alternative to other pervious reported catalysts. Table 2 summarizes the physical and chemical properties of recovered polyol. Specifically, as shown in Table 2, the produced recycled polyol had a high functionality number, ranging from 3 to 4 and a high Hydroxyl number, ranging from 350 to 500. This in turn demonstrates that the recycled polyol has suitable characteristics for use as for example an insulation product. That is, this demonstrates that the method of the invention can be used to recycle rigid PU foam into useful products such as insulation products. Furthermore, the molecular weight and viscosity value of this recycled polyol are within a suitable range to be miscible with other commercially available polyol for rigid foam reproduction into either a spray form or an injection molding process.

### Synthesis of rigid PU foam via cup test

In this test, rigid polyurethane foam formation was tested in a cup where specific physical characteristic of foam formation such as cream time, free rise time, free rise height, gel time, and tack free time are evaluated. That is, the ability of recovered polyol to produce rigid PU foam is tested using standard cup test procedure (FIG. 4). The production process and physical characteristic of rigid polyurethane foam in a cup are measured and tested to verify the blend composition of recovered polyol combined with commercial polyol. The appropriate levels of ingredients in the blend formulations composition are then used to make larger rigid polyurethane foam blocks.

The commercially available polyol was obtained from the Huntsman chemical company and the recovered polyol is the polyol made from the glycolysis reaction of waste flexible mattress foam by crude glycerol and zinc undecylenate. The samples of foam are made by adding the appropriate amount of commercial polyol to an empty cup, then the recovered polyol is added to the cup in the respective amount per sample and mixed thoroughly with the commercial polyol.

The next step is to add the PMDI (polymerized Methylene diphenyl diisocyanate). Immediately after, the PMDI are added (1:1 wight ratio, PMDI : Polyol mixture) a timer is started and the two components in the cup are mixed by hand with a metal mixer until the "mix-to-heat" time is reached. The combining of polyol and PMDI is a highly exothermic reaction so just by the temperature of the cup that holds the mixture, it is possible to tell when it reaches this point. At the mix to heat end point, the clock is re-started, and the foam is allowed to rise until the "rise time", shown in Table 3. The "tact-free" time recorded started at the exact same time as the rise time and signifies when it was possible to touch the foam without any of it sticking to the glove. As the ratio of commercial polyol: Recovered polyol increased, all three times recorded decreased significantly. Specifically, addition of commercial polyol which is already formulated with an appropriate amount of HFO blowing agent results in faster foam formation and a decrease in timing of rise time and tact-free time. However, it is important to note that the recycled polyol can be used alone, that is, as the sole polyol, for rigid PU foam production; After the tact-free time collected, the cups cooled to room temperature very quickly after the foam reached the tact-free point and all of them were very hard, indicating that rigid foam is fully created.

Using the recovered polyol from waste conventional mattress foam reaction, table 3 summarizes the cup testing results. The pictures showed that the blend of recovered polyol and commercial was still able to make rigid PU foam in cup. The reason that this level of rise decreased as the amount of recovered polyol increases is due to reduction of blowing agent by replacing commercial polyol. Adding a few drops of water or any other suitable blowing agent can greatly increase the height of foam. Here, we aimed to show that recovered polygreen polyol is compatible and miscible with commercial polyol and the blend mixture (up to 40% recovered polyol) can readily make rigid PU foam in cup without any formulation. The appropriate levels of chemicals used in blend formulations in cup test and the obtained data are then used to make larger rigid polyurethane foam block, as discussed below.

### Process in production of rigid PU foam block from polygreen polyol and its physical characteristic

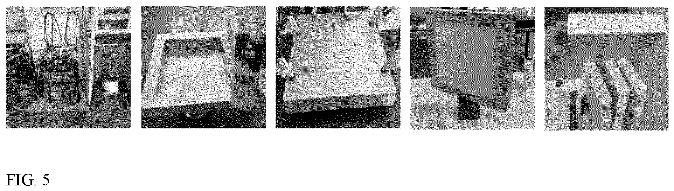

A series of rigid PU foam block parts (30cm wide x 30cm length x 5cm height) were prepared by mixing the recovered polyol generated from waste foam with Huntsman commercial polyol and isocyanate. We have tested the recovered polyols generated using waste flexible mattress PU foam produced from glycerol/zinc undecylenate solvent/catalyst system. The recovered polyol were blended with commercial polyol in various ratios prior mixing/reacting with isocyanate to generate foam. The foam was generated in above mentioned size using a 3 piece mold as shown in FIG. 5. The foam parts were produced by the following procedure:
1. Measure the required recovered polyol and place it in container of PU foam dispenser.
2. Measure the required commercial polyol and place it in same container of PU foam dispenser as recovered polyol.
3. Measure the required isocyanate and place it in another container of PU foam dispenser.
4. Mix the recovered and commercial polyol in the same container with an overhead mixer at approximately 300 rpm
5. Then, using foam dispenser machine and specific injection gun, Inject the mixture of polyol and isocyanate into mold and initiate the reaction
6. Clamp down the mold to provide compression to the foam part
7. Remove the foam part from the mold when ready

FIG. 5 shows the blocks of rigid PU foam made of various ratios of recovered polygreen polyol and commercial polyol. FIG. 5 shows the foam making process and photos of the produced rigid PU foam parts. As shown, the recovered polyol made by reaction of waste flexible mattress PU foam with crude glycerol and zinc undecylenates can be readily used to produce larger pieces of block rigid PU foams. As shown, the polyol mixtures as low as 1wt% recovered polyol (with no further formulation) up to 40.0 wt% recovered polyol (recovered polyol to commercial polyol relative ratio) did react sufficiently to produce satisfactory foam parts. Acceptable foam parts can be generated when lowering the recovered polyol in the mixture down to 10 wt%. However, acceptable rigid PU foam can be produced using recovered polyol higher than 40% with the addition of a suitable blowing agent present formulation and mixture of polyols. For example, an HFO blowing agent such as for example but by no means limited to HFO-1233zd from Arkema can be added to recycled polyol and greatly enhance the foam formation process, for example, by producing bulkier 3D rigid PU foam. Furthermore, as will be apparent to those of skill in the art, addition of other ingredients such as blowing agent, surfactant, catalyst, fire retardant agent and other crude polyol to recycled polyol eliminates the need to use commercial polyol.

The recovered polyol made from waste conventional mattress PU foam, the polyol/isocyanate mixture with 50.0 wt% recycle polyol (no virgin polyol) did not react adequately to produce a satisfied foam part. Mixtures containing 10 wt% to 40 wt% recycle polyol generated acceptable foam parts by visual inspection. Further formulation and addition of blowing agent and catalyst is required to make acceptable rigid PU foam when we used recovered polyol higher than 40wt% content.

While the preferred embodiments of the invention have been described above, it will be recognized and understood that various modifications may be made therein, and the appended claims are intended to cover all such modifications which may fall within the spirit and scope of the invention.

**Table 1: The ingredient and their approximate weight percentages for glycolysis reaction.**

| Component | Weight (%) | Other Range ratio |
|---|---|---|
| Waste Flexible PU Foam | 50 | 30%-50% |
| Solvent (recycled Gly or DEG) | 48 | 70%-50% |
| Catalyst (Zn undecylenate with or without other metal catalyst) | 2% | 2%-5% |

**Table 2: physiochemical characteristic of polygreen polyol obtained from waste flexible foam using novel solvent/catalyst system.**

| Product | Functionality | OH number [mgKOH/g] | MW [g/mol] | Viscosity [mPa*s] shear 1 | color | Water content |
|---|---|---|---|---|---|---|
| Polygreen polyol (from waste conventional mattress foam | 3-4 | 350-500 | 8000-15000 | 1000-2500 | brown | <1% |

**Table 3: the obtained data from cup test process. These data can be used for any large scale rigid PU foam production.**

| | Mass (g) | | | | Time (min:sec) | | |
|---|---|---|---|---|---|---|---|
| Sample | PMDI | Commercial Polyol | Recovered Polyol | V:R ratio | Mix to heat | Rise | Tact-free |
| S1 | 40 | 40 | 0 | 100:0 | 2:37 | 4:53 | 5:14 |
| S2 | 40 | 36 | 4 | 90:10 | 2:08 | 3:36 | 3:48 |
| S3 | 40 | 32 | 8 | 80:20 | 1:49 | 2:14 | 2:36 |
| S4 | 40 | 28 | 12 | 70:30 | 1:11 | 1:32 | 1:45 |
| S5 | 40 | 24 | 16 | 60:40 | 1:02 | 1:18 | 1:24 |

**Table 4**

| SamplesCommercial polyol: recovered polyol | Max compression stress (KPa) | Density (*kg*/ *m*³) | Thermal conductivity (W/mK) | Thermal Resistance M². C/W | Dimensional stability (% change) | Water absorption % |
|---|---|---|---|---|---|---|
| S0 100%:0% | 210-241 | 38-42 | 0.88-0.92 | 1.07-1.12 | -1.51 | 1.7 |
| S4 60%:40% | 220-273 | 39-44 | 0.90-0.99 | 1.05-1.19 | -1.37 | 1.5 |

## Claims

1. A method for recovering polyol from polyurethane foam comprising:
heating a glycolysis solvent thereof to a temperature of about 190°C to about 210°C;
once the glycolysis solvent is heated, adding a quantity of polyurethane foam to the heated solvent such that the polyurethane foam dissolves into polyol,
once the quantity of the polyurethane foam has dissolved into polyol, allowing the polyol to cool and then filtering the polyol,
wherein a metallic catalyst is added to the glycolysis solvent mixture after heating has started but before the solvent reaches 190°C.

2. The method according to claim 1 wherein a product of the finished reaction comprises:
28-70% (w/w) glycolysis solvent;
28-70% (w/w) polyol; and
2-5% (w/w) metal catalyst.

3. The method according to claim 1 wherein a product of the finished reaction comprises:
48-70% (w/w) glycolysis solvent;
28-50% (w/w) polyol; and
2-5% (w/w) metal catalyst.

4. The method according to claim 1 wherein the metallic catalyst is one or more catalysts selected from the group consisting of stannous octoate, potassium octoate, potassium acetate, zinc acetate, barium acetate, tin dilaurate, tin oxide and zinc undecylenate.

5. The method according to claim 1 wherein the metallic catalyst comprises zinc undecylenate.

6. The method according to claim 1 wherein the metal catalyst is added to the glycolysis solvent once the glycolysis solvent has been heated to about 90°C.

7. The method according to claim 1 wherein the polyurethane form is in pieces having a diameter of between about 5 mm and about 25 mm.

8. The method according to claim 1 wherein the glycolysis solvent is selected from the group consisting of glycerol, diethylene glycol, ethylene glycol and mixtures thereof.

9. The method according to claim 2 or 3 wherein the metal catalyst comprises 1-5% (w/w) zinc undecylenate.

10. The method according to claim 9 wherein the metal catalyst further comprises 0-4% (w/w) of a second metal catalyst selected from the group consisting of: stannous octoate, potassium octoate, potassium acetate, zinc acetate, barium acetate, tin dilaurate, and tin oxide.

11. A method for recovering polyol from a quantity of polyurethane foam comprising:
heating a glycolysis solvent comprising glycerol, ethylene glycol, diethylene glycol or a mixture thereof to a temperature of about 90°C and then adding a metal catalyst comprising zinc undecylenate to the glycolysis solvent;
heating the glycolysis solvent and metal catalyst to a temperature of about 190°C to about 210°C and then adding a quantity of polyurethane foam in stages to the heated glycolysis solvent such that the polyurethane foam dissolves into polyol,
wherein once the quantity of polyurethane foam has been added to the glycolysis solvent and the metal catalyst, a product of the reaction comprises:
28-70% (w/w) glycolysis solvent;
28-70% (w/w) polyol; and
2-5% (w/w) metallic catalyst
wherein, prior to addition to the glycolysis solvent, the polyurethane foam is in pieces having a diameter of about 5 mm to about 25 mm, and
once the quantity of the polyurethane foam has dissolved into polyol, allowing the polyol to cool and then filtering the polyol.

12. The method according to claim 11 wherein the product of the reaction comprises:
48-70% (w/w) glycolysis solvent;
28-50% (w/w) polyol; and
2-5% (w/w) metal catalyst.

13. The method according to claim 11 wherein the metal catalyst comprises 1-5% (w/w) zinc undecylenate and 0-4% (w/w) one or more catalysts selected from the group consisting of stannous octoate, potassium octoate, potassium acetate, zinc acetate, barium acetate, tin dilaurate and tin oxide.

14. The method according to any one of claims 1 or 11 wherein dissolving of the polyurethane foam into the polyol is carried out under conditions of limited oxygen.

15. The method according to claim 14 wherein the dissolving of the polyurethane foam is carried out under nitrogen gas.

16. The method according to any one of claims 1 or 11 wherein a condenser is applied to the glycolysis solvent once the glycolysis solvent is heated to about 120°C.

17. The method according to any one of claims 1 or 11 wherein the polyol is cooled to about 60°C before being filtered.

18. The method according to claim 17 wherein the polyol is filtered through a 400 mesh filter.
